# EUROPÄISCHE PATENTANMELDUNG

(11) **EP 4 825 567 A1**
(43) Veröffentlichungstag der Anmeldung: **21.10.2026**
(21) Anmeldenummer: 26166537.6
(22) Anmeldetag: 20.03.2026
(51) Int. Cl.: B29D 11/00

(54) **BRILLENGLASROHLING ZUR HERSTELLUNG VON BRILLENGLÄSERN**

(30) Priorität: 16.04.2025 EP 25170875; 16.04.2025 EP 25170882
(71) Anmelder: Roland Mandler GmbH & Co. KG, 35452 Heuchelheim (DE)
(72) Erfinder: Mandler, Roland, 35452 Heuchelheim (DE)
(74) Vertreter: Knefel, Cordula

(57) **Zusammenfassung**

Die Erfindung betrifft einen Brillenglasrohling zur Herstellung von Brillengläsern, welcher aus einem Linsenelement und einer Ringhalterung gebildet ist, bei dem die Ringhalterung eine Dicke aufweist, die wenigstens teilweise kleiner ist als die Dicke des Linsenelements des Brillenglasrohlings. (Fig. 1).

## Beschreibung

Die Erfindung betrifft einen Brillenglasrohling zur Herstellung von Brillengläsern.

Brillengläser und andere optische Formkörper bestehen vorwiegend aus Kunststoffen, die bei hohem Brechungsindex über ein kleines spezifisches Gewicht verfügen und gut zerspanbar sind. Zur sprachlichen Vereinfachung wird nachstehend an Stelle von "Brillengläsern und anderen Formkörpern" nur noch von Brillengläsern gesprochen, gemeint sind aber immer auch "andere Formkörper mit ähnlichen Eigenschaften".

Brillenglasrohlinge werden, wie aus der
DE 10 2008 064 333 A1 bekannt, in einem Spann- beziehungsweise Aufnahmesystem fixiert und anschließend in mehreren spanenden Bearbeitungsschritten auf CNC-Bearbeitungsvorrichtungen zur Sollgeometrie gebracht. Ausgangspunkt ist typischerweise ein halb- oder vorgeformter Brillenglasrohling ("Blank") mit bereits optisch wirksamer Fläche auf einer Seite, dessen zweite Fläche und dessen Rand durch Fräsen, Drehen, Schleifen, Feinschleifen und gegebenenfalls Polieren bearbeitet wird. Dabei werden auch Randbearbeitungsschritte durchgeführt, um von einem Rohdurchmesser auf den Fertigdurchmesser zu gelangen. Es werden nachfolgende Beschichtungsprozesse (Hard-Coating, Antireflex) durchgeführt. Für diese Bearbeitung ist gemäß diesem Stand der Technik ein Linsenträger für das Aufblocken offenbart, der die Brillenglasrohlinge für die Bearbeitung aufnimmt. Dieses zum Stand der Technik gehörende Verfahren erfordert, dass für jede vorgefertigte Linsenform ein angepasster Linsenträger zur Verfügung gestellt werden muss. Darüber hinaus muss der Brillenglasrohling an dem Linsenträger mit Klebstoff befestigt und nach der Bearbeitung wieder abgelöst werden.

Um ein aufwendiges Aufblockverfahren zu vermeiden, ist aus dem Stand der Technik (DE 10 2007 040 395 A1) eine blockfreie Fertigung von Ein- oder Mehrstärkengläsern bekannt. Hierzu wird der Brillenglasrohling in einer Spannvorrichtung angeordnet. In diesem blockfreien Verfahren wird der Brillenglasrohling in einem Standardring mit Hilfe eines O-Ringes festgespannt. Der Spannring ist wiederverwendbar und lässt sich zusammen mit dem eingelegten Brillenglasrohling in der Spannvorrichtung von beispielsweise CNC-Bearbeitungsmaschinen festspannen. Der Brillenglasrohling wird dann während sämtlicher Bearbeitungsschritte in dem Spannring gehalten. Bei diesem zum Stand der Technik gehörenden Verfahren müssen für die Vielzahl der gleichzeitig zu bearbeitenden Brillenglasrohlinge Spannringe zur Verfügung gestellt werden. Darüber hinaus müssen die Brillenglasrohlinge in den Spannringen mit dem O-Ring befestigt werden.

Weiterhin gehört zum Stand der Technik
(DE 10 2010 061 056 A1) ein Verfahren zur Herstellung von kostenoptimierten Brillengläsern. Gemäß diesem Stand der Technik sind zwei Linsenelemente in einem Brillenglasrohling angeordnet, wodurch geringere Lager- und Transportkosten anfallen. Bei diesem zum Stand der Technik gehörenden Brillenglasrohling wird nach dem Bearbeiten der Linsenelemente sehr viel Randmaterial abgetrennt. Das Randmaterial besteht aus demselben teuren Material wie die Linsenelemente. Dieses Material wird nach der Bearbeitung des Brillenglasrohlings entsorgt, so dass die Kosten der Brillengläser, die gemäß diesem Verfahren hergestellt werden, sehr hoch sind.

Die aus der Praxis bekannten Brillenglasrohlinge wiegen zwischen 40 bis 60 Gramm. Das fertige Brillenglas wiegt zwischen 7 bis 9 Gramm. Das bedeutet, dass 30 bis 60 Gramm an Material (Kunststoff oder Glas) entsorgt wird.

Gemäß dem Stand der Technik (DE 103 38 893 B4,
WO 2005/018919 A1) ist ein Verfahren zur Herstellung von Brillengläsern bekannt, bei dem die Kunststoffformteile einen den Durchmesser vergrößernden Spannring aufweisen und während aller Bearbeitungsschritte am äußeren Umfang des Spannrings gespannt werden. Der Spannring und das Linsenelement sind miteinander verbunden und bilden zusammen eine Kunststoffronde. Die Kunststoffronden bestehen aus zwei fest miteinander verbundenen Kunststoffen, mit einem inneren Linsenelement aus hochwertigem Material und einem konzentrisch umlaufenden Spannring aus preiswerterem Material, der die Durchmesservergrößerung bewirkt. Der Spannring dient als durchgehende Spann- und Ablagefläche während der Fertigung und wird erst nach Abschluss der wesentlichen Bearbeitungsschritte zusammen mit einem schmalen Randbereich des Linsenelements vom fertigen Brillenglas abgetrennt. Bei diesem zum Stand der Technik gehörenden Verfahren ist es erforderlich, den Brillenglasrohling aus zwei verschiedenen Materialien herzustellen. Diese Herstellung eines Brillenglasrohlings mit teurem Linsenelement und billigem Spannring ist im Vergleich zu einem einteiligen Kunststoffrohling sehr aufwendig. Für das Herstellen und stoffschlüssige Verbinden der zwei unterschiedlichen Kunststoffteile mit Gießen oder Spritzgießen des Spannrings an dem Linsenelement oder mit Kleben oder Schweißen oder Umspritzen des Spannrings an dem Linsenelement sind zusätzliche, aufeinander abzustimmende Prozessschritte notwendig, wodurch der Herstellungsprozess komplexer und damit kosten- und zeitaufwendiger wird.

Das der Erfindung zugrunde liegende technische Problem besteht darin, einen Brillenglasrohling anzugeben, der einen Haltering für die Bearbeitung in verschiedenen Bearbeitungsschritten aufweist und der gleichzeitig preiswert ist.

Dieses technische Problem wird durch einen Brillenglasrohling mit den Merkmalen gemäß Anspruch 1 gelöst.

Der erfindungsgemäße Brillenglasrohling zur Herstellung von Brillengläsern, welcher aus einem Linsenelement und einer Ringhalterung gebildet ist, bei dem das Linsenelement und die Ringhalterung aus demselben Material gebildet sind, zeichnet sich dadurch aus, dass zwischen dem Linsenelement und der Ringhalterung eine das Linsenelement in radialer Richtung begrenzende Ringfläche mit einer Höhe ausgebildet ist, und dass die Ringhalterung eine Dicke aufweist, die wenigstens teilweise kleiner ist als die Höhe der Ringfläche.

Brillenglasrohlinge werden üblicherweise aus Kunststoff gegossen.

Grundsätzlich kann der Brillenglasrohling alternativ aus Glas bestehen.

Der erfindungsgemäße Brillenglasrohling weist ein Linsenelement auf und eine Ringhalterung. Vorteilhaft umgibt die Ringhalterung das Linsenelement. Besonders vorteilhaft ist die Ringhalterung konzentrisch um das Linsenelement herum angeordnet.

Das Linsenelement und die Ringhalterung, das heißt der gesamte Brillenglasrohling, bestehen erfindungsgemäß aus ein und demselben Material.

Damit der erfindungsgemäße Brillenglasrohling preiswert aufgebaut ist, ist die Dicke der Ringhalterung wenigstens teilweise kleiner als die Höhe der das Linsenelement in radialer Richtung begrenzende Ringfläche des Brillenglasrohlings.

Gemäß der Erfindung ist der Brillenglasrohling aus dem Linsenelement und der Ringhalterung gebildet. Linsenelement und Ringhalterung bestehen aus demselben Material.

Es wird keine Unterscheidung zwischen einem preiswerten Material für eine Ringhalterung und einem teuren Material für das Linsenelement gemacht.

Zwischen dem Linsenelement und der Ringhalterung ist eine Ringfläche gebildet. Es handelt sich hierbei um eine fiktive Ringfläche in dem Brillenglasrohling, da Linsenelement und Ringhalterung aus ein und demselben Material bestehen. Diese Ringfläche wird zu einer Außenfläche in radialer Richtung des Brillenglasrohlings, wenn die Ringhalterung nach den verschiedenen Bearbeitungsschritten des Linsenelements entfernt wird.

Diese Ringfläche weist eine Höhe auf. Die Höhe der Ringfläche ist in axialer Richtung des Brillenglasrohlings ausgerichtet.

Gemäß der Erfindung weist die Ringhalterung eine Dicke auf, die wenigstens teilweise kleiner ist als die Höhe der Ringfläche.

Durch diese Ausbildung des Brillenglasrohlings kann im Bereich der Ringhalterung erheblich Material eingespart werden. Da die Ringhalterung und das Linsenelement aus ein und demselben Material bestehen, wird die Herstellung des Brillenglasrohlings vereinfacht, da das Linsenelement und die Ringhalterung in einem Arbeitsschritt, das heißt beispielsweise in einem Gießvorgang, ausgebildet werden können. Es besteht alternativ auch die Möglichkeit, erst das Linsenelement zu gießen und die Ringhalterung anzugießen.

Gerade im Bereich der Ringhalterung kann gemäß der Erfindung erheblich Material eingespart werden, da die Ringhalterung wenigstens teilweise eine geringere Dicke aufweist.

Die Ringhalterung hat die Funktion, Brillenglasrohlinge während der verschiedenen Bearbeitungsvorgänge zu halten.

Die Ringhalterung kann in einem Spann- oder Aufnahmesystem fixiert werden und das Linsenelement des Brillenglasrohlings kann in verschiedenen Bearbeitungsschritten, beispielsweise spanenden Bearbeitungsschritten auf beispielsweise CNC-Maschinen in eine Sollgeometrie gebracht werden.

Der Brillenglasrohling ist vorteilhaft ein halb- oder vorgeformter Brillenglasrohling mit optisch wirksamer Fläche auf einer Seite, dessen zweite Fläche durch Fräsen, Drehen, Schleifen, Feinschleifen und/oder gegebenenfalls Polieren bearbeitet wird.

Grundsätzlich kann auch ein Brillenglasrohling verwendet werden, der auf beiden Seiten bearbeitet wird.

Nach dem Bearbeiten des Linsenelements in dem Brillenglasrohling werden Randbearbeitungsschritte durchgeführt, bei denen die Ringhalterung entfernt wird, um auf den Fertigdurchmesser des herzustellenden Brillenglases zu gelangen.

Anschließend können noch Beschichtungsprozesse, wie Hardcoating oder Antireflex, durchgeführt werden.

Da die Ringhalterung nach den verschiedenen Bearbeitungsschritten ohnehin entfernt wird, besteht die Möglichkeit, diese Ringhalterung so dünn wie möglich auszugestalten, um Material einzusparen.

Mit dem erfindungsgemäßen Brillenglasrohling können pro Jahr 30.000 Tonnen Material eingespart werden.

Gemäß einer besonders vorteilhaften Ausführungsform der Erfindung ist vorgesehen, dass der Brillenglasrohling mit der Ringhalterung und dem Linsenelement als gegossener Brillenglasrohling ausgebildet ist.

Der Brillenglasrohling wird vorteilhaft als gegossener Brillenglasrohling ausgebildet. Hierdurch kann der Brillenglasrohling mit der Ringhalterung und dem Linsenelement besonders einfach und preiswert hergestellt werden.

Besonders vorteilhaft ist die Ringhalterung mit der wenigstens teilweise geringeren Dicke als die Höhe der Ringfläche unmittelbar bei dem Gießvorgang mit ausgebildet.

Gemäß einer besonders bevorzugten Ausführungsform der Erfindung ist vorgesehen, dass das Linsenelement und die Ringhalterung einstückig ausgebildet sind. Hierdurch werden Arbeitsschritte durch das Angießen oder anderweitige Befestigen einer Ringhalterung vermieden.

Gemäß einer weiteren vorteilhaften Ausführungsform der Erfindung ist vorgesehen, dass der Brillenglasrohling mit dem Linsenelement und der Ringhalterung als ein in einem Gießvorgang gegossener Brillenglasrohling ausgebildet ist.

Durch diese Ausführungsform werden Arbeitsschritte eingespart. Der Brillenglasrohling mit dem Linsenelement und der Ringhalterung werden in einem einzigen Gießvorgang hergestellt, nämlich gegossen.

Hierdurch werden Spannungen zwischen dem Linsenelement und der Ringhalterung ebenfalls vermieden.

Eine weitere vorteilhafte Ausführungsform der Erfindung sieht vor, dass die Dicke der Ringhalterung über eine gesamte radiale Erstreckung der Ringhalterung kleiner ist als die Höhe der das Linsenelement in radialer Richtung begrenzenden Ringfläche.

Durch diese Ausführungsform wird besonders viel Material eingespart.

Die Ringhalterung weist vorteilhaft eine Dicke auf, die eine stabile Halterung des Brillenglasrohlings während der verschiedenen Bearbeitungsprozesse gewährleistet. Für die stabile Halterung ist vorteilhaft eine vorgegebene Mindestranddicke der Ringhalterung vorgesehen. Der Brillenglasrohling wird mit der Ringhalterung in der Bearbeitungsvorrichtung oder den Bearbeitungsvorrichtungen fixiert.

Die größte Ersparnis wird erzielt, wenn die Ringhalterung vorteilhaft in ihrer gesamten radialen Ausdehnung um die Längsachse des Brillenglasrohlings eine Dicke aufweist, die kleiner ist als die Höhe der Ringfläche zwischen dem Linsenelement und der Ringhalterung.

Gemäß einer weiteren besonders bevorzugten Ausführungsform der Erfindung ist vorgesehen, dass die Ringhalterung als Flansch ausgebildet ist.

Der Flansch ist vorteilhaft einstückig mit dem Linsenelement in dem Gießvorgang ausgebildet.

Grundsätzlich besteht auch die Möglichkeit, den Flansch nachträglich anzugießen.

Die Ausbildung als Flansch weist den Vorteil auf, dass eine besonders große Materialersparnis erzielt wird. Es ist in diesem Fall nicht so viel "Opfermaterial" vorhanden.

Gemäß einer weiteren vorteilhaften Ausführungsform der Erfindung ist vorgesehen, dass der Flansch als planparalleler oder als sich einseitig verjüngender Flansch oder als sich beidseitig verjüngender Flansch ausgebildet ist.

Diese Ausführungsformen weisen den Vorteil auf, dass der Flansch plane Auflageflächen für eine Spannvorrichtung in einer Bearbeitungsvorrichtung aufweist. Der Flansch kann sich alternativ in Richtung des Linsenelements oder in Richtung des Randes verjüngen. Die Verjüngung kann auf einer Seite des Flansches vorgesehen sein. Die Verjüngung kann alternativ auf beiden Seiten des Flansches vorgesehen sein. Ist die Verjüngung auf beiden Seiten des Flansches vorgesehen, verjüngt sich der Flansch vorteilhaft zu einem Außendurchmesser des Brillenglasrohlings hin.

Gemäß einer weiteren vorteilhaften Ausführungsform der Erfindung ist vorgesehen, dass die Ringhalterung auf wenigstens einer Seite wenigstens eine Einbuchtung aufweist.

Durch die wenigstens eine Einbuchtung wird ebenfalls eine Materialersparnis erzielt.

Handelt es sich um einen Brillenglasrohling, der eine vorgefertigte Seite aufweist, ist die Einbuchtung besonders vorteilhaft auf der vorgefertigten Seite ausgebildet. Die Einbuchtung wird beim Gießvorgang unmittelbar in der Ringhalterung mit ausgebildet.

Grundsätzlich besteht auch die Möglichkeit, dass die Ringhalterung auf beiden Seiten wenigstens eine Einbuchtung aufweist. Hierdurch wird eine noch größere Materialersparnis erzielt.

Wesentlich an dem erfindungsgemäßen Brillenglasrohling ist, dass die Einbuchtung unmittelbar beim Herstellvorgang des Brillenglasrohlings ausgebildet wird.

Die Einbuchtung wird nicht durch nachträgliche Fräs- oder Bearbeitungsvorgänge ausgebildet. Hierdurch würde sich keine Materialersparnis ergeben.

Eine weitere vorteilhafte Ausführungsform der Erfindung sieht vor, dass auf einer oder beiden Seiten des Brillenglasrohlings zwischen dem Linsenelement und der Ringhalterung ein Radius ausgebildet ist. Es ist vorteilhaft zwischen dem Linsenelement und der Ringhalterung ein weicher Übergang vorgesehen.

Ein weicher Übergang ist keine Kante oder dergleichen.

Diese Ausführungsform kann bei verschiedenen Bearbeitungsvorgängen von Vorteil sein, da der Brillenglasrohling bis zum Rand des Linsenelements oder über den Rand des Linsenelements hinaus in Richtung Ringhalterung bearbeitet werden kann.

Gemäß einer anderen vorteilhaften Ausführungsform der Erfindung ist vorgesehen, dass auf einer oder beiden Seiten des Brillenglasrohlings zwischen dem Linsenelement und der Ringhalterung eine Kante ausgebildet ist.

Die Ausbildung mit der Kante kann ebenfalls bei verschiedenen Bearbeitungsvorgängen von Vorteil sein. Insbesondere definiert eine Kante das Fertigmaß des Linsenelements, vorteilhaft zuzüglich eines Bearbeitungsmaßes, um das Linsenelement später in einer Brillenfassung einpassen zu können.

Gemäß einer weiteren vorteilhaften Ausführungsform der Erfindung ist vorgesehen, dass auf einer Seite des Brillenglasrohlings zwischen dem Linsenelement und der Ringhalterung ein Radius ausgebildet ist und dass auf der gegenüberliegenden Seite des Brillenglasrohlings zwischen dem Linsenelement und der Ringhalterung eine Kante ausgebildet ist.

Diese Ausführungsform kann ebenfalls bei verschiedenen Bearbeitungsvorgängen von besonderem Vorteil sein. Auch bei dieser Ausführungsform ist die Begrenzung des Linsenelements in Bezug auf das Fertigmaß sichtbar.

Eine weitere vorteilhafte Ausführungsform der Erfindung sieht vor, dass die Ringhalterung parallel oder im Winkel zu einer Horizontalen des Brillenglasrohlings angeordnet ist. Diese Ausführungsform ist besonders vorteilhaft bei der Ausbildung der Ringhalterung als Flansch. Der Brillenglasrohling ist vorteilhaft scheibenförmig ausgebildet. Durch die Scheibe ist eine Horizontale festgelegt.

Die Ringhalterung ist vorteilhaft parallel zu der Horizontalen ausgerichtet. Es besteht auch alternativ die Möglichkeit, die Ringhalterung in einem Winkel zu der Horizontalen auszurichten.

Diese Ausführungsform kann vorteilhaft sein in Abhängigkeit von verschiedenen Bearbeitungsvorrichtungen oder in Abhängigkeit von verschiedenen Spannfuttern oder Aufnahmen einer Bearbeitungsvorrichtung.

Gemäß einer weiteren vorteilhaften Ausführungsform der Erfindung weist der Brillenglasrohling zwei Flächen auf und die erste Fläche des Brillenglasrohlings ist als zu bearbeitende Fläche ausgebildet.

Brillenglasrohlinge werden häufig als vorgefertigte Brillenglasrohlinge ausgebildet. Hierbei weist eine Seite schon aufgrund des Gießvorgangs die erforderlichen optischen Eigenschaften auf. Es wird lediglich noch die zweite Seite bearbeitet. Hierdurch wird Bearbeitungszeit eingespart.

Ist eine vorgefertigte Seite vorhanden, ist die Einbuchtung vorzugsweise auf der vorgefertigten Seite angeordnet.

Gemäß einer vorteilhaften Ausführungsform der Erfindung weist die Einbuchtung einen Radius auf. Das bedeutet, dass es sich um eine im Querschnitt teilkreisförmige Einbuchtung handelt. Die Einbuchtung kann alternativ eine im Querschnitt kurvenförmige Einbuchtung sein. Es handelt sich dann im Querschnitt um eine parabelförmige oder ellipsenförmige Einbuchtung.

Besonders vorteilhaft ist vorgesehen, dass eine kurvenförmige Einbuchtung vorgesehen ist, wenn auf der gegenüberliegenden Seite ein weicher Übergang zwischen dem Linsenelement und der Ringhalterung vorgesehen ist.

Ist die Ringhalterung als plane Ringhalterung, beispielsweise in Form eines Flansches, ausgeführt, ist vorteilhaft zwischen dem Linsenelement und der Ringhalterung eine Kante vorgesehen. In diesem Fall erkennt man den Rand des Linsenelements, das heißt des späteren Brillenglases.

Gemäß einer weiteren vorteilhaften Ausführungsform der Erfindung steht das Linsenelement, das heißt das Funktionsglas, über dem Rohling vor.

Gemäß einer vorteilhaften Ausführungsform besteht die Möglichkeit, dass auf beiden Seiten eine angegossene Einbuchtung vorgesehen ist.

Gemäß einer weiteren vorteilhaften Ausführungsform der Erfindung weist der Rand des Brillenglasrohlings eine Dicke von 1,1 bis 1,5 Millimetern auf. Vorzugsweise ist eine Dicke von 1,2 Millimetern vorgesehen.

Weist die Ringhalterung auf einer Seite eine Einbuchtung oder auf beiden Seiten jeweils eine Einbuchtung auf, ist der Rand der Ringhalterung dicker ausgebildet als die Dicke der Ringhalterung im Bereich der einen oder der beiden Einbuchtungen.

Gemäß der vorteilhaften Ausführungsform mit einer Einbuchtung auf einer Seite oder mit je einer Einbuchtung auf jeder Seite ist der Rand der Ringhalterung dicker als die schmalste Stelle der Ringhalterung. Hierdurch werden besonders gute Halteeigenschaften in den verschiedenen Bearbeitungsvorrichtungen erreicht.

Bei dem erfindungsgemäßen Brillenglasrohling sind vorteilhaft zwei Flächen für die Ausbildung der optischen Wirkung vorgesehen. Eine der Flächen ist die sogenannte "Rezeptfläche". Diese Fläche wird bearbeitet. Um die Wirtschaftlichkeit zu erhöhen, wird vorteilhaft nur die Seite an dem Brillenglasrohling bearbeitet, die später auch tatsächlich als Brillenglas benötigt wird. Die andere Seite an dem Brillenglasrohling ist bereits fertiggestellt.

Das Zusammenwirken der optischen Eigenschaften von Vorder- und Rückseite ergibt ein Brillenglas mit idealer Anpassung an das Rezept eines Augenarztes (Rezeptfertigung).

Die Spezialgeometrie der Vorderseite (Rezeptfläche) wird vorteilhaft so gestaltet, dass die Gesamtwirkung des Brillenglases von vorne gesehen auch ästhetischen Gesichtspunkten gerecht wird. Das bedeutet zum Beispiel, dass keine verzerrten Abbildungseigenschaften bei Durchsicht von vorne auftreten. Dies gilt auch, wenn bei diesen Brillengläsern die optische Wirkung für den Fern- und den Nahteil optimiert ist (Bifokal, progressiv) und eine Dickenoptimierung mit Anpassung an die Brillenfassung und eine Anpassung der relativen Lage der Linsenachsen zum Auge durchgeführt wird (Individualgläser).

Bei der Herstellung von Plus-Gläsern (Linsenmitte ist dicker als Linsenrand) und bei Neutral-Gläsern (Linsenmitte ist gleich dick wie Linsenrand) ist darauf zu achten, dass die Dicke der Linsen so weit reduziert wird, wie dies im Hinblick auf die verbleibende Randdicke, das heißt die Dicke am Umfangsrand des fertigen Brillenglases, möglich ist. Die Randdicke muss eingehalten werden, damit die Linse in der Brillenfassung einwandfrei montiert werden kann, das heißt, diese Dicke muss in etwa der Breite des Rahmens der Brillenfassung entsprechen.

Bei Minus-Gläsern (Linsenmitte ist dünner als Linsenrand) wird im Rahmen einer Dickenoptimierung die Dicke der Linsen so weit reduziert, wie dies im Hinblick auf die verbleibende Restdicke in der Linsenmitte möglich ist. Eine gewisse Mindestdicke in der Linsenmitte ist erforderlich, damit die mechanische Stabilität des Brillenglases gewährleistet ist.

Mit dem erfindungsgemäßen Brillenglasrohling ist eine Rezeptfertigung besonders einfach möglich. Wegen der Spezialgeometrie an einer Linsenseite (vorzugsweise Vorderseite) kann auch bei Rezeptfertigung mit halbfertigen Kunststoffrohlingen (Halbfertigteilen) in grober Abstufung gearbeitet werden. Daraus folgt eine Minimierung der Fertigungskosten, da nur eine Seite des Brillenglasrohlings bearbeitet wird und Lagerkosten bei weniger Halbfertigteilen aufgrund der großen Abstufung benötigt werden.

Mit dem erfindungsgemäßen Brillenglasrohling kann 40 bis 50 % an Material eingespart werden.

Der erfindungsgemäße Brillenglasrohling weist darüber hinaus den Vorteil auf, dass die zu bearbeitende Fläche ca. 30 % kleiner ist als bei den aus der Praxis bekannten Brillenglasrohlingen. Hierdurch verkürzen sich die Bearbeitungszeiten, beispielsweise das Fräsen oder Polieren.

Auch bei der nachfolgenden Beschichtung weist der erfindungsgemäße Brillenglasrohling den Vorteil auf, dass durch die Ringhalterung der Brillenglasrohling einfach handhabbar ist und dass eine Automatisierung beim Befüllen von Antireflex-Beschichtungskalotten möglich ist, weil die Ringhalterung auf eine Standardgröße, das heißt einen einheitlichen Durchmesser festgelegt werden kann.

Weitere Merkmale und Vorteile der Erfindung ergeben sich anhand der zugehörigen Zeichnungen, in denen verschiedene Ausführungsbeispiele eines Brillenglasrohlings dargestellt sind, ohne die Erfindung auf diese Ausführungsbeispiele zu beschränken. In den Zeichnungen zeigen:
- Fig. 1: einen Längsschnitt durch einen erfindungsgemäßen Brillenglasrohling;
- Fig. 2: ein geändertes Ausführungsbeispiel;
- Fig. 3: ein geändertes Ausführungsbeispiel;
- Fig. 4: ein geändertes Ausführungsbeispiel;
- Fig. 5: ein geändertes Ausführungsbeispiel;
- Fig. 6: ein geändertes Ausführungsbeispiel;
- Fig. 7: ein geändertes Ausführungsbeispiel.

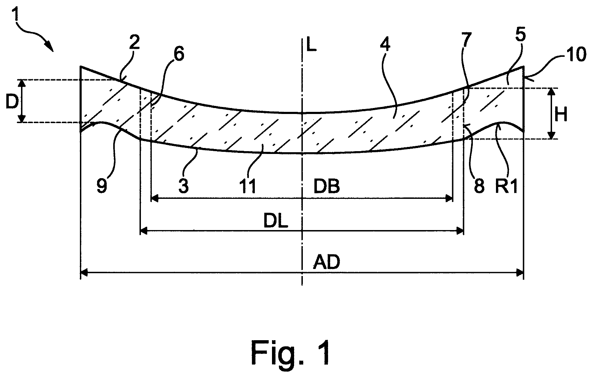

Fig. 1 zeigt einen Brillenglasrohling 1, der eine Frontseite 2 aufweist und eine Rückseite 3. Die Rückseite 3 ist eine fertig gegossene Seite, die bis auf möglicherweise Polier- oder Beschichtungsverfahren nicht weiterbearbeitet wird. Die Frontseite 2 wird mit spannehmenden Verfahren, wie beispielsweise einem Fräsverfahren, gemäß einem Rezept bearbeitet.

Der Brillenglasrohling 1 weist ein Linsenelement 4 und eine Ringhalterung 5 auf. Eine Konturlinie 6 begrenzt das fertige Brillenglas. Eine Konturlinie 7 begrenzt einen inneren Bereich, nämlich das Linsenelement 4, der innerhalb der Ringhalterung 5 angeordnet ist. Zwischen dem Linsenelement 4 und der Ringhalterung 5 ist eine in radialer Richtung das Linsenelement 4 begrenzende Ringfläche 8 angeordnet.

In dem Brillenglasrohling 1 ist die Ringfläche 8 eine Art fiktive Fläche. Wird nach dem Bearbeiten der Frontseite 2 des Brillenglasrohlings 1 die Ringhalterung 5 entfernt, bildet die Ringfläche 8 eine Außenfläche des Linsenelements 4.

Der Brillenglasrohling 1 ist im Wesentlichen scheibenförmig ausgebildet. Der Brillenglasrohling 1 weist eine Längsachse L auf.

In der Ringhalterung 5 des Brillenglasrohlings 1 ist eine Einbuchtung 9 angeordnet. Die Einbuchtung 9 ist auf der Rückseite 3 des Brillenglasrohlings 1 angeordnet. Es handelt sich hierbei um die von einem Gießvorgang fertiggestellte Seite des Brillenglasrohlings 1.

Die Einbuchtung 9 weist einen Radius R1 auf. Das bedeutet, die Einbuchtung 9 ist im Querschnitt teilkreisförmig ausgebildet. Das Linsenelement 4 und die Ringhalterung 5 sind aus ein und demselben Material hergestellt, beispielsweise aus Glas oder Kunststoff.

Zur Herstellung eines Brillenglases aus dem Brillenglasrohling 1 wird die Frontseite 2 des Brillenglasrohlings bearbeitet. Die Bearbeitung erfolgt beispielsweise in einer CNC-gesteuerten Maschine (nicht dargestellt). Beispielsweise wird mittels eines Fräsers die Frontseite 2 abgetragen, bis eine sogenannte Rezeptfläche entsteht. Nach den Bearbeitungsvorgängen, wie Fräsen, Drehen, Schleifen, Feinschleifen und/oder Polieren, wird die Ringhalterung 5 ebenfalls abgefräst, und zwar bis zu der Konturlinie 7 des inneren Bereichs. Hierdurch bleibt genügend Material an dem Linsenelement 4, um dieses später in eine Brillenfassung einzupassen.

Durch die Ausbildung der Einbuchtung 9 kann Material des Brillenglasrohlings 1 bei dessen Herstellung eingespart werden. Die Ringhalterung 5 weist an der schmalsten Stelle, gebildet durch die Einbuchtung 9, eine Dicke D auf.

Die Ringfläche 8 weist eine Höhe H auf.

Die Höhe H der Ringfläche 8 des Linsenelements 4 ist größer als die Dicke D der Ringhalterung 5 an der schmalsten Stelle.

Die schmalste Stelle wird gemäß Fig. 1 im Bereich der Einbuchtung 9 gebildet.

Die Ringhalterung 5 weist damit eine Dicke D auf, die wenigstens teilweise kleiner ist als die Höhe H der Ringfläche.

Durch diese Ausbildung des Brillenglasrohlings 1 lässt sich erheblich an Material einsparen.

Wichtig ist, dass der Brillenglasrohling 1 eine Außenfläche 10 aufweist, mit der der Brillenglasrohling 1 in einer Bearbeitungsvorrichtung gespannt werden kann. Der Brillenglasrohling 1 wird beispielsweise mit der Außenfläche 10 in einem Spannfutter einer CNC-gesteuerten Bearbeitungsvorrichtung eingespannt (nicht dargestellt).

Das fertige Brillenglas 11 weist einen Durchmesser DB auf. Das Linsenelement 4 weist einen Durchmesser DL auf. Das Linsenelement 4 weist gegenüber dem Brillenglas 11 einen größeren Durchmesser auf, damit dieses in eine Brillenfassung eingepasst werden kann.

Der gesamte Brillenglasrohling weist einen Außendurchmesser AD auf.

Der Brillenglasrohling 1 mit dem Linsenelement 4 und der Ringhalterung 5 ist als gegossener Brillenglasrohling 1 ausgebildet. Das Linsenelement 4 und die Ringhalterung 5 sind einstückig ausgebildet. Besonders vorteilhaft wird der Brillenglasrohling 1 mit dem Linsenelement 4 und der Ringhalterung 5 als ein in einem Gießvorgang gegossener Brillenglasrohling 1 ausgebildet.

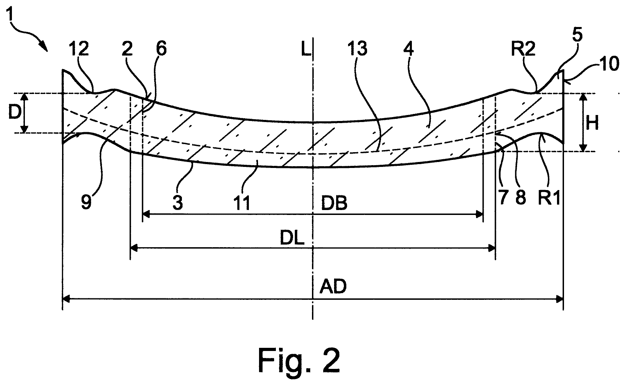

Fig. 2 zeigt den Brillenglasrohling gemäß Fig. 1. Gleiche Teile sind mit gleichen Bezugszeichen versehen.

Gemäß Fig. 2 weist die Ringhalterung 5 an der Frontseite zusätzlich eine Einbuchtung 12 auf. Diese Einbuchtung 12 weist einen Radius R2 auf.

Das bedeutet, dass der Brillenglasrohling 1 gemäß Fig. 2 zwei Einbuchtungen 9, 12 aufweist, wodurch die Materialersparnis noch deutlich erhöht wird.

Gemäß Fig. 2 wird der Brillenglasrohling 1 auf der Frontseite 3 bis auf eine Konturlinie 13 abgefräst, so dass entlang der Konturlinie 13 eine sogenannte Rezeptfläche entsteht.

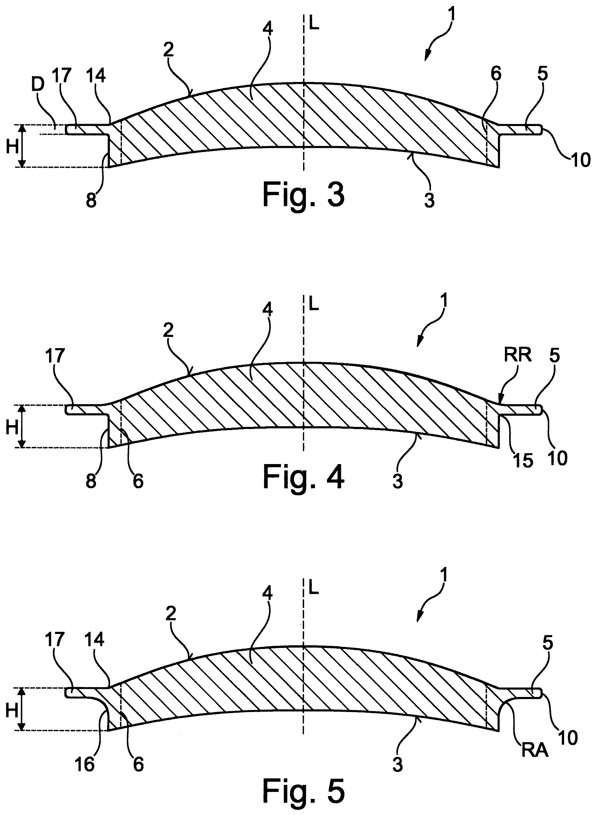

Gemäß Fig. 3 ist der Brillenglasrohling 1 lediglich schematisch dargestellt. Der Brillenglasrohling 1 weist ein Linsenelement 4 und eine Ringhalterung 5 auf. Die Ringhalterung 5 ist als Flansch 17 ausgebildet. Durch diese Ausbildung als Flansch 17 kann deutlich mehr Material bei der Herstellung des Brillenglasrohlings 1 eingespart werden. Zwischen der Frontseite 2 und dem Flansch 17 ist eine Kante 14 ausgebildet. Zwischen der Ringfläche 8 und dem Flansch 17 ist eine Kante 15 ausgebildet.

Gemäß Fig. 4 ist der Brillenglasrohling 1 mit dem Linsenelement 4 und der Ringhalterung 5 dargestellt. Zwischen der Frontseite 2 und dem Flansch 17 ist ein Radius RR ausgebildet. Zwischen der Ringfläche 8 und dem Flansch 17 ist die Kante 15 ausgebildet.

Gemäß Fig. 5 weist der Brillenglasrohling 1 das Linsenelement 4 und die Ringhalterung 5 auf. Zwischen der Frontseite 2 des Brillenglasrohlings und dem Flansch 17 ist die Kante 14 ausgebildet. Zwischen einer Außenfläche 16 des Linsenelements 4 und dem Flansch 17 ist ein Radius RA ausgebildet.

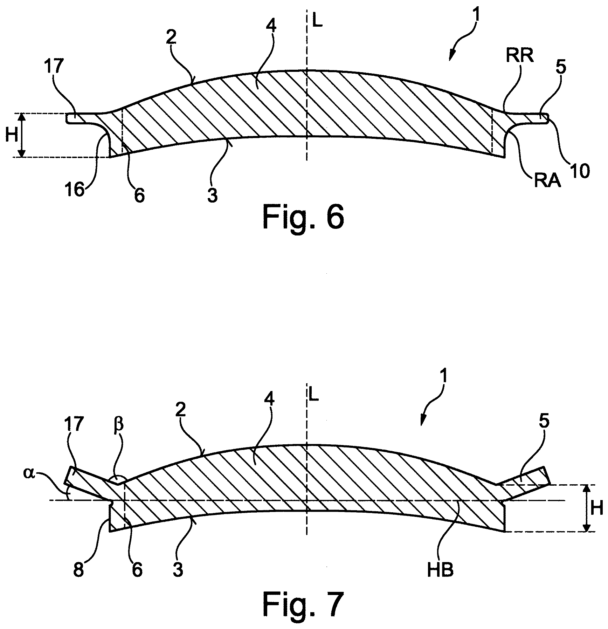

Gemäß Fig. 6 weist das Linsenelement 4 des Brillenglasrohlings 1 den Flansch 17 auf. Zwischen der Frontseite 2 und dem Flansch 17 ist der Radius RR ausgebildet. Zwischen der Außenfläche 16 des Linsenelements 4 und dem Flansch 17 ist der Radius RA ausgebildet.

Gemäß Fig. 7 weist der Brillenglasrohling 1 das Linsenelement 4 und den Flansch 17 auf. Der Brillenglasrohling 1 ist scheibenförmig ausgebildet. Der Brillenglasrohling 1 weist eine Horizontale HB auf. Der Flansch 17 ist gegenüber der Horizontalen HB abgewinkelt angeordnet. Zwischen dem Flansch 17 und der Horizontalen HB wird der Winkel α eingeschlossen. Zwischen dem Flansch 17 und der Frontseite 2 wird der Winkel β eingeschlossen.

Die Flansche 17, die in den Fig. 3 bis 6 dargestellt sind, sind parallel zu der Horizontalen HB ausgerichtet.

Die verschiedenen Ausführungsformen lassen sich beliebig miteinander kombinieren.

Wesentlicher Vorteil der Erfindung ist, dass durch die verringerte Dicke D der Ringhalterung 5 eine Materialersparnis bei der Herstellung des Brillenglasrohlings 1 erzielt wird.

### Bezugszahlen

- 1: Brillenglasrohling
- 2: Frontseite
- 3: Rückseite
- 4: Linsenelement
- 5: Ringhalterung
- 6: Konturlinie fertiges Brillenglas
- 7: Konturlinie innerer Bereich
- 8: Ringfläche des Linsenelements
- 9: Einbuchtung
- 10: Außenfläche des Brillenglasrohlings
- 11: Brillenglas
- 12: Einbuchtung
- 13: Konturlinie
- 14: Kante
- 15: Kante
- 16: Außenfläche
- 17: Flansch

- AD: Außendurchmesser
- D: Dicke
- DB: Durchmesser Brillenglas
- DL: Durchmesser Linsenelement
- H: Höhe der Ringfläche 8
- HB: Horizontale des Brillenglasrohlings
- L: Längsachse
- R1: Radius
- R2: Radius
- RA: Radius Außenfläche
- RR: Radius Rückseite
- α: Winkel
- β: Winkel

## Patentansprüche

1. Brillenglasrohling zur Herstellung von Brillengläsern, welcher aus einem Linsenelement und einer Ringhalterung gebildet ist, bei dem das Linsenelement und die Ringhalterung aus demselben Material gebildet sind,
**dadurch gekennzeichnet, dass** zwischen dem Linsenelement (4) und der Ringhalterung (5) eine das Linsenelement (4) in radialer Richtung begrenzende Ringfläche (8) mit einer Höhe (H) ausgebildet ist, und dass die Ringhalterung (5) eine Dicke (D) aufweist, die wenigstens teilweise kleiner ist als die Höhe (H) der Ringfläche (8).

2. Brillenglasrohling nach Anspruch 1, **dadurch gekennzeichnet, dass** der Brillenglasrohling (1) mit der Ringhalterung (5) und dem Linsenelement (4) als gegossener Brillenglasrohling ausgebildet ist.

3. Brillenglasrohling nach einem der vorhergehenden Ansprüche, **dadurch gekennzeichnet, dass** das Linsenelement (4) und die Ringhalterung (5) einstückig ausgebildet sind.

4. Brillenglasrohling nach einem der vorhergehenden Ansprüche, **dadurch gekennzeichnet, dass** der Brillenglasrohling (1) mit dem Linsenelement (4) und der Ringhalterung (5) als ein in einem Gießvorgang gegossener Brillenglasrohling ausgebildet ist.

5. Brillenglasrohling nach einem der vorhergehenden Ansprüche, **dadurch gekennzeichnet, dass** die Dicke (D) der Ringhalterung (5) über eine gesamte radiale Erstreckung der Ringhalterung (5) kleiner ist als die Höhe (H) der Ringfläche (8) zwischen dem Linsenelement (4) und der Ringhalterung (5).

6. Brillenglasrohling nach einem der vorhergehenden Ansprüche, **dadurch gekennzeichnet, dass** die Ringhalterung (5) als Flansch (17) ausgebildet ist.

7. Brillenglasrohling nach Anspruch 6, **dadurch gekennzeichnet, dass** der Flansch (17) als planparalleler oder als sich einseitig verjüngender Flansch (17) oder als sich beidseitig verjüngender Flansch (17) ausgebildet ist.

8. Brillenglasrohling nach einem der vorhergehenden Ansprüche, **dadurch gekennzeichnet, dass** die Ringhalterung (5) auf wenigstens einer Seite wenigstens eine Einbuchtung (9, 12) aufweist.

9. Brillenglasrohling nach einem der vorhergehenden Ansprüche, **dadurch gekennzeichnet, dass** auf einer oder beiden Seiten (2, 3) des Brillenglasrohlings (1) zwischen dem Linsenelement (4) und der Ringhalterung (5) ein Radius (RA, RR) ausgebildet ist.

10. Brillenglasrohling nach einem der Ansprüche 1 bis 8, **dadurch gekennzeichnet, dass** auf einer oder beiden Seiten (2, 3) des Brillenglasrohlings (1) zwischen dem Linsenelement (4) und der Ringhalterung (5) eine Kante (14, 15) ausgebildet ist.

11. Brillenglasrohling nach einem der Ansprüche 1 bis 8, **dadurch gekennzeichnet, dass** auf einer Seite (2, 3) des Brillenglasrohlings (1) zwischen dem Linsenelement (4) und der Ringhalterung (5) ein Radius (RA, RR) ausgebildet ist, und dass auf der gegenüberliegenden Seite (2, 3) des Brillenglasrohlings (1) zwischen dem Linsenelement (4) und der Ringhalterung (5) eine Kante (14, 15) ausgebildet ist.

12. Brillenglasrohling nach einem der vorhergehenden Ansprüche, **dadurch gekennzeichnet, dass** die Ringhalterung (5) parallel oder im Winkel zu einer Horizontalen (HB) des Brillenglasrohlings (1) angeordnet ist.

13. Brillenglasrohling nach einem der vorhergehenden Ansprüche, **dadurch gekennzeichnet, dass** der Brillenglasrohling (1) eine Frontseite (2) und eine Rückseite (3) aufweist, und dass die Frontseite (2) des Brillenglasrohlings (1) als zu bearbeitende Frontseite (2) ausgebildet ist.
